# EUROPEAN PATENT SPECIFICATION

(11) **EP 0 465 792 B1**
(45) Date of publication and mention of the grant of the patent: **21.08.1996**
(21) Application number: 91107467.2
(22) Date of filing: 08.05.1991
(51) Int. Cl.: C08F 285/00, C08L 69/00, C08L 67/02

(54) **Multi-layer polymer, thermoplastic resin composition containing the same, and shaped article produced using the composition**
Mehrschichtiges Polymer, dieses enthaltende thermoplastische Harzzusammensetzung und aus dieser Zusammensetzung hergestellte Formkörper
Polymère multi-couche, composition de résine thermoplastique le contenant et article moulé fabriqué à partir de cette composition

(30) Priority: 11.05.1990 JP 121517/90; 25.07.1990 JP 197387/90
(43) Date of publication of application: 15.01.1992
(73) Proprietor: Takeda Chemical Industries, Ltd., Chuo-ku, Osaka (JP); MITSUBISHI GAS CHEMICAL COMPANY, INC., Tokyo, 100 (JP)
(72) Inventor: Fujii, Tatsuo, Nagaokakyo, Kyoto 617 (JP); Oshima, Junji, Toyonaka, Osaka 560 (JP); Teraoka, Takao, Akashi, Hyogo 674 (JP); Shimaoka, Goro, Hiratsuka, Kanagawa 254 (JP); Mizutani, Makoto, Hiratsuka, Kanagawa 254 (JP); Ishii, Kazuhiko, Hiratsuka, Kanagawa 254 (JP)
(74) Representative: von Kreisler, Alek, Dipl.-Chem.

(56) References cited:
- EP-A- 0 132 339
- DATABASE WPI, N 78-26084A, DERWENT PUBLICATIONS LTD, LONDON, GB; & JP-B-61,009,982

## Description

### Field of the Invention

This invention relates to a multi-layer polymer, a thermoplastic resin composition containing the same as an impact modifier and a shaped article produced using said composition. More particularly, the invention relates to a multi-layer polymer suitable for use as an impact modifier, a thermoplastic resin composition containing the same and providing a shaped article having improved impact resistance, and in particular a colored articles having evenness in color without delamination in the neighborhood of a gate of a mold when being molded.

### Background of the Invention

Being tough, excellent in impact and electrical characteristics, and high in dimensional stability, polycarbonate resin has been used as a versatile engineering plastic. However, this resin has several drawbacks, namely high melt viscosity, poor moldability, thickness dependency of impact resistance, and poor chemical resistance as evidenced by the incidence of cracks in contact with chemicals. For instance, brittle fracture occurs when a test piece of more than 6.35 mm (1/4 inch) thick is given impact; even with a test piece of 3.18 mm (1/8 inch) thick, the lower the temperature, the smaller the impact strength. All these defects delimit its application.

Therefore, many attempts have been made to overcome the above-mentioned disadvantages. For example, Japanese Patent Publication No. 36-14035 proposed addition of polyethylene terephthalate resin to an aromatic polycarbonate resin to improve chemical resistance. Japanese Patent Laid-open No. 48-54150 proposed addition of polybutylene terephthalate resin to improve surface hardness and chemical resistance. However, these methods do not insure sufficient impact resistance.

Japanese Patent Laid-opens No. 56-45946 and No. 56-45947 proposed a resin composition composed of an aromatic polycarbonate resin and an acrylic polymer as an impact modifier which is particularly improved in impact resistance at low temperature. Japanese Patent Publication No. 62-37671 also proposed a resin composition composed of an aromatic polycarbonate resin, a polyester resin and an acrylic elastomer. It is true that these resin compositions have improved impact resistance, but are colored unevenly when they contain a coloring agent. This phenomenon is known as pearlescence in the trade, and is particularly pronounced when a high shear load is added to the resin composition, for example, in the neighborhood of a gate of a mold. Therefore, the use of the resin composition is limited unless a surface coating or like treatment is applied thereto. Furthermore, when the resin composition is molded, the resultant molded articles are very often accompanied by delamination where the resin composition receives a high shear load, for example, in the gate region, to provide molded articles infeasible for practical use.

Meanwhile Japanese Patent Publication No. 61-9982 discloses a resin composition composed of polycarbonate resin and a multi-layer polymer composed of a first stage polymer of an aromatic vinyl monomer, a second stage polymer of an alkyl acrylate wherein the alkyl has 1-8 carbons and a third stage polymer or copolymer of an aromatic vinyl monomer which has a glass transition temperature of not less than 50°C to improve impact resistance without reduction of transparency of polycarbonate resin. However, neither mention was made of elimination of unevenness in color, nor of thickness dependency of impact resistance and impact resistance at low temperature.

Japanese Patent Publication No. 1-34463 also (EP-A-132339) discloses an attempt to improve evenness in color by adding a multi-layer polymer consisting of a first layer of styrenic polymer, a second layer of alkyl acrylate polymer wherein the alkyl has 1-8 carbons and a third layer of alkyl methacrylate polymer wherein the alkyl has 1-8 carbons to a colored mixture of polycarbonate resin and polyester resin. The resultant polymer composition has the multi-layer polymer dispersed in the phase of polycarbonate resin in the mixture of polycarbonate resin and polyester resin, and any improvements realized are not altogether satisfactory.

### Summary of the Invention

It is, therefore an object of the invention to provide a multi-layer polymer suitable for use as an impact modifier in a resin composition.

It is a further object of the invention to provide a polycarbonate resin composition and a polycarbonate-polyester resin composition containing the multi-layer polymer and providing a shaped article which has particularly improved impact resistance, and also evenness in color when the composition contains a coloring agent therein.

In accordance with the invention, there is provided a multi-layer polymer which comprises a core layer formed from an aromatic vinyl monomer, an intermediate rubbery polymer layer formed from an alkyl acrylate monomer wherein the alkyl has 2-8 carbons and a glassy shell layer composed of a styrene-acrylonitrile copolymer with the acrylonitrile in an amount of not more than 30 % by weight based on the total of the monomers used for the shell layer wherein the styrene-acrylonitrile copolymer is cross-linked with a cross-linking monomer in an amount of 5-15 % by weight based on the total of the monomers used for the shell layer.

In accordance with the invention, there is also provided a thermoplastic resin composition which comprises:
(a) a polycarbonate resin; and
(b) a multi-layer polymer which is composed of 12-42% by weight of a core layer formed from an aromatic vinyl monomer, 48-78% by weight of an intermediate rubbery polymer layer formed from an alkyl acrylate monomer wherein the alkyl has 2-8 carbons and 10-40% by weight of a glassy shell layer composed of a styrene-acrylonitrile copolymer with the acrylonitrile in an amount of not more than 30% by weight based on the total of the monomers used for the shell layer wherein the styrene-acrylonitrile copolymer is cross-linked with a cross-linking monomer in an amount of 5-15% by weight based on the total of the monomers used for the shell layer.

Herein the specification, this resin composition will be often referred to as the first resin composition of the invention.

In accordance with the invention, there is further provided a thermoplastic resin composition which comprises:
(a) a thermoplastic resin containing a polycarbonate resin and a polyester resin; and
(b) a multi-layer polymer which comprises a core layer formed from an aromatic vinyl monomer, an intermediate rubbery polymer layer formed from an alkyl acrylate monomer wherein the alkyl has 2-8 carbons and a glassy shell layer composed of a styrene-acrylonitrile copolymer with the acrylonitrile in an amount of not more than 30% by weight based on the total of the monomers used for the shell layer wherein the styrene-acrylonitrile copolymer is cross-linked with a cross-linking monomer in an amount of 5-15% by weight based on the total of the monomers used for the shell layer.

Herein the specification, this resin composition will be often referred to as the second resin composition of the invention.

Additionally there are provided molded articles made of the above first or second resin composition.

The specific nature of the invention, as well as other objects, uses and advantages thereof, will clearly appear from the description and from the accompanying drawings, in which:
Fig. 1 is an electron microphotograph of an embodiment of the composition according to the invention; and
Fig. 2 is an electron microphotograph of a resin composition as a Comparative Example.

### Detailed Description of the Invention

The polycarbonate resin used in the present invention is commonly utilized for engineering plastics. Preferred is an optionally branched thermoplastic polycarbonate resin which is produced by reacting an aromatic dihydroxy compound as such or a mixture thereof with a small proportion of a polyhydroxy compound with phosgene or a carbonic diester.

Examples of said aromatic dihydroxy compound are 2,2-bis(4-hydroxyphenyl)propane (also known as bisphenol A), tetramethylbisphenol A, tetrabromobisphenol A, bis (4-hydroxyphyl)-p-diisopropylbenzene, hydroquinone, resorcinol and 4,4-dihydroxydiphenyl. Particularly preferred is bisphenol A.

To prepare a branched aromatic polycarbonate resin, phloroglucinol, 4,6-dimethyl-2,4,6-tri(4-hydroxyphenyl)heptene-2, 4,6-dimethyl-2,4,6-tri(4-hydroxyphenyl)heptane, 2,6-dimethyl-2,4,6-tri(4-hydroxyphenyl)heptene-3, 1,3,5tri(4-hydroxyphenyl)benzene, 1,1,1-tri(4-hydroxyphenyl)-ethane, 3,3-bis(4-hydroxyaryl)oxyindole (also known as isatin bisphenol), 5-chloroisatin, 5,7-dichloroisatin on 5-bromoisatin is used to substitute said dihydroxy compounds in part (for example 0.1 to 2 mole %).

As the aromatic monohydroxy compound suited for molecular weight adjustment, m- or p-methylphenol, m- or p-propylphenol, p-bromophenol, p-tert-butylphenol and p-long chain alkyl-substituted phenols can be used with advantage. Among typical examples of the polycarbonate resin are these based on bis(4-hydroxyphenyl)alkane dihydroxy compounds, particularly bisphenol A. The polycarbonate copolymer obtainable by using two or more different aromatic dihydroxy compounds in combination or the branched polycarbonate obtainable by using a small proportion of a trihydroxy phenol compound in conjunction can also be employed. Furthermore, two or more different polycarbonate resins can be used as a mixture.

The polyester resin can also be one that is commonly employed for engineering plastics. Particularly preferred is a polyalkylene terephthalate obtainable by polycondensation of terephthalic acid or a dialkyl ester thereof with an aliphatic glycol or a copolymer based thereon. Typical examples of such thermoplastic polyester resin are polyethylene terephthalate (PET) or polybutylene terephthalate (PBT).

The aliphatic glycol mentioned above includes ethylene glycol, propylene glycol, tetramethylene glycol, and hexamethylene glycol. These aliphatic glycols can be used in combination with other diols and/or polyhydric alcohols. These diols and polyhydric alcohols are used preferably in a proportion not exceeding 40 parts by weight based on 100 parts by weight of the aliphatic glycol.

Preferred examples of said diols are cyclohexanediol, cyclohexanedimethanol, xylylene glycol, 2,2-bis(4-hydroxyphenyl)propane, glycerol and pentaerythritol.

Furthermore, di-, tri- or polybasic acids or alkyl esters thereof can also be used in combination with terephthalic acid or dialkyl esters thereof. The proportion thereof is preferably not greater than 40 parts by weight based on 100 parts by weight of terephthalic acid or its dialkyl ester.

Examples of such acids and esters are phthalic acid, isophthalic acid, naphthalenedicarboxylic acid, diphenyldicarboxylic acid, adipic acid, sebacic acid and trimellitic acid, and the corresponding alkyl esters.

The multi-layer polymer of the present invention can be produced by a multi-stage seed emulsion polymerization method in which a polymer formed in a preceding stage is serially covered with a polymer formed in the following stage in a continuous sequence. In the practice of the present invention, three-stage emulsion polymerization is generally carried out.

The first-stage polymerization, which provides said core layer, is carried out using an aromatic vinyl monomer. This aromatic vinyl monomer includes, inter alia, styrene, vinyltoluene, α-methylstyrene, monochlorostyrene, 3,4-dichlorostyrene and bromostyrene. Preferred is styrene.

In this first-stage polymerization, a non-aromatic monomer copolymerizable with said aromatic vinyl monomer may be optionally employed. Its proportion is preferably not more than 50% by weight based on the total monomer for the first-stage polymerization. The more useful proportion is not more than 20% by weight. The non-aromatic monomer mentioned above includes, inter alia, alkyl acrylates such as ethyl acrylate and butyl acrylate, alkyl methacrylate such as methyl methacrylate and butyl methacrylate, and vinyl cyanides or vinylidene cyanide such as acrylonitrile and methacrylonitrile.

The core layer may be cross-linked with a cross-linking monomer. The cross-linking monomer may be used in an amount of not more than 30% by weight, preferably in an amount of 0.5-20% by weight, more preferably in an amount of 5-15% by weight, based on the total monomer for the first-stage polymerization. As said cross-linking monomers, monomers each containing two or more ethylenic unsaturation may be employed. More particularly there may be employed aromatic divinyl monomers such as divinylbenzene and alkane polyol poly(meth)acrylates such as ethylene glycol di(meth)acrylate, butylene glycol di(meth)acrylate, hexanediol di(meth) acrylate, olygoethylene glycol di(meth)acrylates, trimethylolpropane di(meth)acrylate and trimethylolpropane tri(meth)acrylate, among these is preferred divinylbenzene.

Grafting monomers may also be employed. The amount of such monomers is preferably not more than 5% by weight, preferably 0.1-2% by weight based on the total monomer for the first-stage polymerization.

The grafting monomers are the monomers containing two or more ethylenic unsaturations dissimilar in reactivity. More specifically, unsaturated carboxylic acid allyl esters such as allyl (meth)acrylate, diallyl maleate, dially fumarate and diallyl itaconate can be mentioned. Particularly preferred is allyl methacrylate.

The second-stage polymerization uses an alkyl acrylate wherein the alkyl has 2-8 carbons or a mixture of such acrylates to form said intermediate rubbery polymer layer. The glass transition temperature of such rubbery polymer is preferably not higher than -30°C for practical purposes. The alkyl acrylate includes, inter alia, ethyl acrylate, propyl acrylate, butyl acrylate, cyclohexyl acrylate and 2-ethylhexyl acrylate. Particularly useful are butyl acrylate and 2-ethylhexyl acrylate.

In the second-stage polymerization, other vinyl monomers copolymerizable with said alkyl acrylates can be employed. The proportion of such other vinyl monomers is not more than 50% by weight, preferably not more than 30% by weight based on the total monomer for the second-stage polymerization.

The vinyl monomers mentioned just above include, inter alia, aromatic vinyl or vinylidene compounds such as styrene, vinyltoluene and α-methylstyrene, vinyl or vinylidene cyanides such as acrylonitrile and methacrylonitrile, and alkyl methacrylates such as methyl methacrylate and butyl methacrylate.

In addition, the cross-linking monomers mentioned hereinbefore may also be used in conjunction in the second stage polymerization. Particularly, divinylbenzene, butylene glycol diacrylate or hexanediol diacrylate is useful, among these is preferred divinylbenzene. The proportion of such monomers is 0.01-5% by weight, preferably 0.1-2% by weight based on the total monomer for the second-stage polymerization.

The grafting monomers mentioned hereinbefore may also be employed. Particularly preferred is allyl methacrylate. The proportion of such monomers not more than 5% by weight, preferably 0.1-2% by weight based on the total monomer for the second-stage polymerization.

The third-stage polymerization for the shell layer is carried out in such a manner that a cross-linked rigid styrene-acrylonitrile copolymer with a glass transition temperature of not less than 50°C will cover the rubbery polymer. The proportion of acrylonitrile is not more than 30% by weight based on the total monomer for the third-stage polymerization.

The crosslinking monomers mentioned for the first-stage polymerization is used in the third-stage polymerization in an amount of 5-15% by weight, based on the total monomer for the third-stage polymerization. Particularly, divinylbenzene and butylene glycol dimethacrylate may be preferably used, and divinylbenzene is most preferred.

A hard intermediate polymer layer may be interposed between the intermediate rubbery polymer layer and the hard shell layer. This hard intermediate polymer layer is composed of a rigid polymer with a glass transition temperature of not less than 50°C and is preferably formed by using, inter alia, an alkyl methacrylate preferably of 1-5 carbons such as methyl methacrylate and butyl methacrylate

The cross-linking monomers mentioned for the first-stage polymerization may be used for the preparation of the hard intermediate layer in an amount of not more than 30% by weight, preferably 0.5-20% by weight, more preferably 5-15% by weight, based on the total monomer used for the hard intermediate layer. Particularly preferred are divinylbenzene and butylene glycol methacrylate, the former being most preferred.

The grafting monomers mentioned for the first-stage polymerization may also be used for the preparation of the hard intermediate layer in an amount of not more than 5% by weight, preferably not more than 1% by weight based on the total monomer used for the hard intermediate layer.

It is preferred that the core and/or hard intermediate and shell layers are cross-linked with the cross-linking monomers in an amount of about 5-15% by weight of the monomers used in the each layer, respectively, in contrast to the multi-layer polymer of prior art which contains in each layer, if any, only a small amount of cross-linking monomers to prevent reduction of impact strength.

However, the multi-layer polymer of the invention has such a core and/or hard intermediate and shell layers as are cross-linked with the cross-linking monomers in such a large amount as above mentioned, and the incorporation of such a multi-layer polymer into a polycarbonate resin or a mixture of polycarbonate resin and polyester resin provides a polymer composition which has improved evenness in color without deterioration of impact strength.

It is preferred, however, that the total amount of the cross-linking monomers used in the core, hard intermediate and shell layers is 1-30% by weight, preferably 3-20% by weight, based on the total amount of the monomers used in the core, hard intermediate and shell layers.

The multi-layer polymer used in the invention may be obtained as follows. From the latex formed by the known seed emulsion polymerization process, the polymer is separated by a freeze-thaw or salting-out procedure and subjected to centrifugal dehydration and drying to give granules, flakes or powders. By the spray-drying technique, the polymer may be directly harvested from the latex. If desired, the multi-layer polymer thus obtained is further processed into pellets with an extruder and pelletizer or be used as it is.

It is preferred that the multi-layer polymer has a toluene soluble portion of not more than 10% by weight, most preferably not more than 6% by weight. The use of such a multi-layer polymer in a polycarbonate or a polycarbonate-polyester resin composition provides a shaped article having improved evenness in color. The toluene soluble portion is defined herein as the amount of the polymer in percentage by weight dissolved in toluene in an amount one hundred times in weight the amount of the polymer when the polymer is dispersed in the toluene and left standing at room temperature for 48 hours.

It is also desirable that the multi-layer polymer has a particle size of 100-700 nm, preferably 200-500 nm so that the resultant resin composition has satisfactorily improved impact resistance.

The multi-layer polymer used in the first resin composition of the invention is preferably composed of 12-42% by weight of the core layer, 48-78% by weight of the intermediate rubbery polymer layer and 10-40% by weight of the shell layer, preferably 15-30% by weight of the core layer, 50-65% by weight of the intermediate rubbery polymer layer and 15-25% by weight of the shell layer based on the multi-layer polymer.

The multi-layer polymer may contain the hard intermediate polymer layer. The amount of the hard intermediate polymer layer should be such that the total amount of this layer and the shell layer accounts for 10-40% by weight, preferably 15-25% by weight, based on the whole multi-layer polymer. Further, the amount should be within the range of 0-100 parts by weight based on 100 parts by weight of the outer shell layer.

The total of the proportions of said core, intermediate, hard intermediate polymer layer and shell layers is 100 weight percent.

The first resin composition of the invention contains 0.5 to 60 parts by weight, preferably 1 to 25 parts by weight, of the above multi-layer polymer in relation to 100 parts by weight of the polycarbonate resin.

The first resin composition of the invention is markedly improved in impact resistance at low temperature and markedly reduced in temperature dependency of impact resitance while it holds inherent dynamic and electrical characteristics and dimensional stability of polycarbonate resin.

In turn, the multi-layer polymer used in the second resin composition of the invention is composed of 10-40% by weight of the core layer, 30-80% by weight of the intermediate rubbery polymer layer and 10-40% by weight of the shell layer, preferably 15-30% by weight of the core layer, 40-70% by weight of the intermediate rubbery polymer layer and 15-25% by weight of the shell layer based on the multi-layer polymer.

The multi-layer polymer may also contain the hard intermediate polymer layer. The amount of the hard intermediate polymer layer is the same as in the first resin composition.

The second resin composition of the invention contains 0.5 to 50 parts by weight, preferably 1 to 25 parts by weight, of the above described multi-layer polymer in relation to 100 parts by weight of a thermoplastic resin mixture consisting of 5 to 95% by weight of said polycarbonate resin and 95 to 5% by weight of said polyester resin.

The ratio of polycarbonate resin to polyester resin can be selected as desired within the above-mentioned range. By way of illustration, when the characteristics of the polycarbonate resin count much, the range of 95 to 50% by weight of polycarbonate resin vs. 5 to 50% by weight of polyester resin is preferred. On other hand, when the characteristics of polyester resin are important, the range of 5 to 50% by weight of polycarbonate resin vs. 95 to 50 % by weight of polyester resin is preferred.

The second resin composition of the invention which contains 50-95% by weight of polycarbonate resin and 50-5% by weight of polyester resin, preferably 60-95% by weight of polycarbonate resin and 40-5% by weight of polyester resin, is composed of a matrix of the polycarbonate resin in which the polyester resin is dispersed, and the multi-layer polymer is dispersed substantially in the phase of the polyester resin. This is most clearly seen in the resin composition containing polybutylene terephthalate as a polyester resin.

The second resin composition of the invention insures not only the inherent dynamic and electrical characteristics and dimensional stability of polycarbonate resin but also the improved processability and solvent resistance originating from the polyester resin.

Furthermore, the multi-layer polymer contained in the second resin composition also insures a marked improvement in impact resistance at low temperature without detracting from the above-mentioned desirable chracteristics.

The resin composition of the invention, either the first or the second, can be produced by blending the polycarbonate resin (and polyester resin) and multi-layer polymer in the proportions defined herein.

There is virtually no restriction on the blending process and technique but melt-blending is a preferred procedure. Melt-blending is generally carried out at a temperature of 200 to 300°C by means of a hot roll, a Banbury mixer or a single-screw or twin-screw extruder.

The resin compositions of the invention may contain additives in appropriate proportions. For example, stabilizers, pigments, flame retardants, lubricants, inorganic fillers, antistatic agents, mold releases and ultraviolet absorbers be incorporated.

Referring to the pigments, in particular, a variety of pigments including titanium oxide, iron oxide and other types of inorganic pigments, organic dyes and pigments such as azo and phthalocyanine dyes, and carbon black may be employed. These pigments may be used in an amount of 0.01 to 20 parts by weight in relation to 100 parts by weight of the resin composition.

The resin compositions of the invention may be molded into articles of desired shapes, by ordinary molding techniques such as injection molding, extrusion molding, and compression molding at a temperature of 200°C to 300°C. The resulting shaped articles find application as automotive parts such as bumpers, fenders and door-handles, office automation equipment parts and household electrical appliance parts.

Meanwhile in the production of colored articles, the resin compositions of the invention insure a marked improvement in evenness in color, free from whitening and other colorimetric drawbacks.

As a further improvement, there takes place substantially no delamination of molded articles in the neighborhood of the gate of a mold when the resin compositions are molded.

### Examples

The following examples and comparative examples are intended to illustrate the invention in further detail and should by no means be construed as being limitative of the scope of the invention.

In the examples and comparative examples, all parts are by weight and the abbreviations used therein have the following meanings.

| | |
|---|---|
| 2-Ethylhexyl acrylate | 2EHA |
| n-Butyl acrylate | BA |
| Methyl methacrylate | MMA |
| Styrene | St |
| Acrylonitrile | AN |
| Allyl methacrylate | AIMA |
| 1,4-Butylene glycol acrylate | BGA |
| Divinylbenzene | DVB |
| Deionized water | DIW |
| Sodium dioctyl sulfosuccinate | SSS |
| Sodium persulfate | SPS |
| Sodium hydrogen carbonate | SHC |
| Glass transition temperature | Tg |
| Polycarbonate | PC |
| Polybutylene terephthalate | PBT |
| Polyethylene terephthalate | PET |

The weight average particle size of the multi-layer polymer was measured with a laser particle analyzer (Ohtsuka Electronics Co., Ltd., LPA-3000).

### Production of Multi-layer Polymer

### Example 1

### Production of Multi-layer Polymer A

A 5-liter polymerization equipment equipped with a reflux condenser was charged with 448 g of DIW, 12 g of 1% aqueous solution of SSS, and 32 g of 1% aqueous solution of SHC and the charge was heated to 70°C in a nitrogen stream with stirring. Then, 30 g of MMA was added and dispersed over a period of 10 minutes, after which 80 g of 2% aqueous solution of SPS was added for seed polymerization.

| First-stage monomer emulsion: | |
|---|---|
| St | 332 g |
| DVB | 36 g |
| AlMA | 2 g |
| SSS, 1% aq. soln. | 308 g |
| SHC, 1% aq. soln. | 48 g |
| DIW | 192 g |

The temperature was then increased to 75°C and 918 g of the above first-stage monomer emulsion was continuously fed over a period of 60 minutes, followed by ageing at 80°C for one hour. Thereafter, 80 g of 2% aqueous solution of SPS was added and then 2320 g of the following second-stage monomer emulsion was fed over a period of 180 minutes to carry out the second-stage polymerization at 80°C followed by ageing at 80°C for one hour.

| Second-stage monomer emulsion: | |
|---|---|
| 2EHA | 1176 g |
| DVB | 18 g |
| AIMA | 6 g |
| SSS, 1% aq. soln. | 960 g |
| SHC, 1% aq. soln. | 80 g |
| DIW | 80 g |

Then 50 g of 2% aqueous solution of SPS and 580 g of the following third-stage monomer emulsion was fed over a period of 60 minutes to carry out the third-stage polymerization at 80°C, followed by ageing at 80°C for one hour.

| Third-stage monomer emulsion: | | |
|---|---|---|
| Third-stage monomers | St | 240 g |
| | AN | 100 g |
| | DVB | 60 g |
| SSS, 1% aq. soln. | | 100 g |
| SHC, 1% aq. soln. | | 40 g |
| DIW | | 40 g |

After cooling to room temperature, the reaction mixture was filtered through a 300-mesh stainless steel sieve to yield a core-shell polymer latex with a solid content of 44.4% and a weight average particle size of 276 nm. This latex was precipitated by freeze-thaw, rinsed, dehydrated and dried to provide a multi-layer polymer A.

### Examples 2 and 3

### Production of Multi-layer Polymers B and C

In accordance with the formula shown in Table 1, the procedure of Example 1 comprising emulsion polymerization, freeze-thaw, rinse, dehydration and drying steps was followed to give multi-layer polymers B and C.

### Comparative Example 1

### Production of Multi-layer Polymer D

A 2-liter polymerization equipment equipped with a reflux condenser was charged with 600 g of DIW, 20 g of 2% aqueous solution of SSS and 40 g of 1% aqueous solution of SHC and the mixture was heated to 70°C in a nitrogen stream with constant stirring. Then, 40 g of the following first-stage monomers were added and dispersed over a period of 10 minutes, after which 80 g of 2% aqueous solution of SPS was added for seed polymerization.

| First-stage monomers: | |
|---|---|
| 2EHA | 792 g |
| AIMA | 4 g |
| BGA | 4 g |

Then 1080 g of the following first-stage monomer emulsion was added continuously over a period of 180 minutes, and the mixture was heated to 90°C, followed by ageing at 90°C for one hour.

| First-stage monomer emulsion: | |
|---|---|
| First-stage monomers | 760 g |
| SSS, 2% aq. soln. | 280 g |
| SHC, 1% aq. soln. | 40 g |

After the mixture was cooled to 70°C, 20 g of 2% aqueous solution of SPS were added and then 360 g of the following second-stage monomer emulsion were fed over a period of 45 minutes to carry out the second-stage polymerization, followed by ageing at an elevated temperature of 90°C for one hour.

| Second-stage monomer emulsion: | |
|---|---|
| MMA | 200 g |
| SSS, 1% aq. soln. | 60 g |
| SHC, 1% aq. soln. | 20 g |
| DIW | 80 g |

After cooling to room temperature, the reaction mixture was filtered through a 300-mesh stainless steel sieve to yield a core-shell polymer latex with a solid content of 44.7% and a weight average particle size of 293 nm. This latex was precipitated by freeze-thaw, rinsed, dehydrated and dried to provide a multi-layer polymer D.

### Comparative Examples 2 to 4

### Production of Multi-layer Polymers E to G.

In accordance with the charge formulations indicated in Table 1, the procedure of Example 1 comprising emulsion polymerization, freeze-thaw precipitation, rinse, dehydration and drying steps was followed to provide multi-layer polymers E to G.

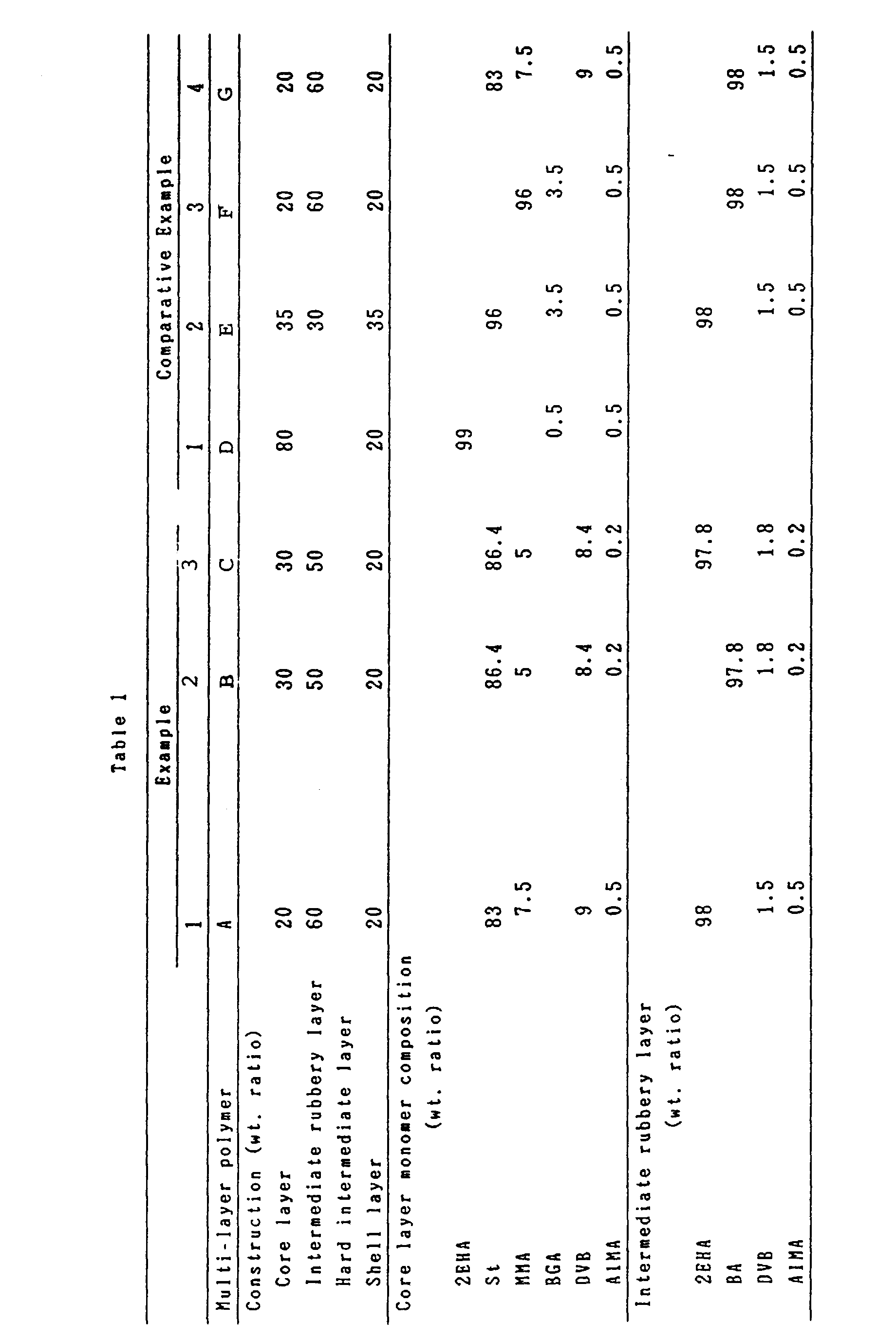

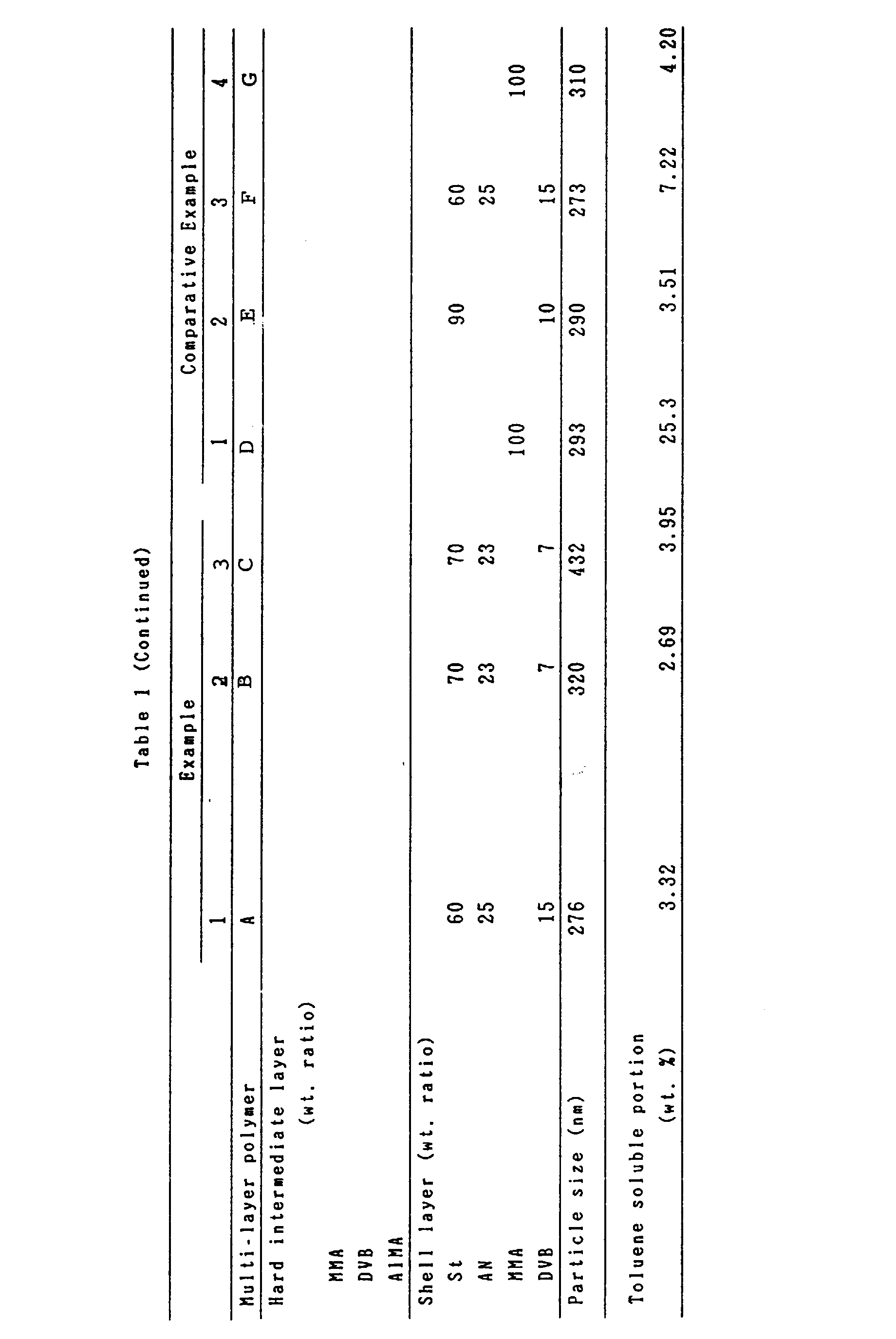

### SECTION A

### Polycarbonate Base Resin Composition

### Example 4

### Production of Thermoplastic Resin Composition (1)

To 100 parts by weight of a resin mixture consisting of 95 parts by weight of bisphenol A-based polycarbonate resin (Mitsubishi Gas Chemical, Iupilon S-3000; hereinafter referred to as S-3000) and 5 parts by weight of multi-layer polymer A was added 0.1 part by weight of carbon black, and the mixture was melt-blended and extruded with a 40 mm single-screw extruder at a cylinder temperature of 240-260°C to give pellets of thermoplastic resin composition (1).

### Examples 5 and 6

### Production of Thermoplastic Resin Compositions (2) and (3)

The procedure of Example 4 was repeated except that multi-layer polymers B and C were respectively used in lieu of multi-layer polymer A to provide pellets of thermoplastic resin compositions (2) and (3).

### Comparative Examples 5 to 7

### Production of Thermoplastic Resin Compositions (4) to (6)

The procedure of Example 4 was repeated except that multi-layer polymers D, E and G were respectively used in lieu of multi-layer polymer A to provide pellets of thermoplastic resin compositions (4) to (6).

### Comparative Example 8

### Production of Thermoplastic Resin Composition (7)

To 100 parts by weight of polycarbonate resin (S-3000) were added 0.1 part by weight of carbon black and the resultant mixture was melt-blended and extruded with a 40 mm single-screw extruder at a cylinder temperature of 240-260°C to give pellets of thermoplastic resin composition (7).

### Test Example 1

### Test For Impact Resistance

Pellets of thermoplastic resin compositions (1) to (8) were respectively dried at 110°C for not less than 6 hours and then injection-molded at 240-260°C to prepare test specimens. Each specimen was notched by machining to give 3.18 mm a (1/8 inch) thick and a 6.35 mm (1/4 inch)- thick test piece for Izod impact test as directed in JIS K7113.

The impact resistance was measured at 23°C with the 6.35 mm (1/4 inch)-thick test piece, and at -40°C with the 3.18 mm (1/8 inch)-thick test piece in accordance with JIS K7113. The results are shown in Table 2.

The delamination of the article at the gate was visually evaluated.

### Test Example 2

Pellets of thermoplastic resin compositions (1) to (7) were respectively dried at 110°C for not less than 6 hours and then injection-molded at 240-260°C into test specimens of three graded thicknesses (2 mm, 3 mm, 4 mm).

The L value of the 4 mm thick portion and the color difference (ΔE value ) between the 2 mm and 4 mm thick portions were determined with a Suga Testing Machine SM color computer. The results are shown in Table 2. The L value represents the depth of color, and the smaller the value of the color, the nearer to perfect black the color is; while ΔE value represents the degree of unevenness of color, and the larger the value, the larger the difference in color between the 2 mm and 4 mm thick portions of the test specimen. Accordingly, it is desirable that both values are as small as possible so that resin compositions are excellent in colorability.

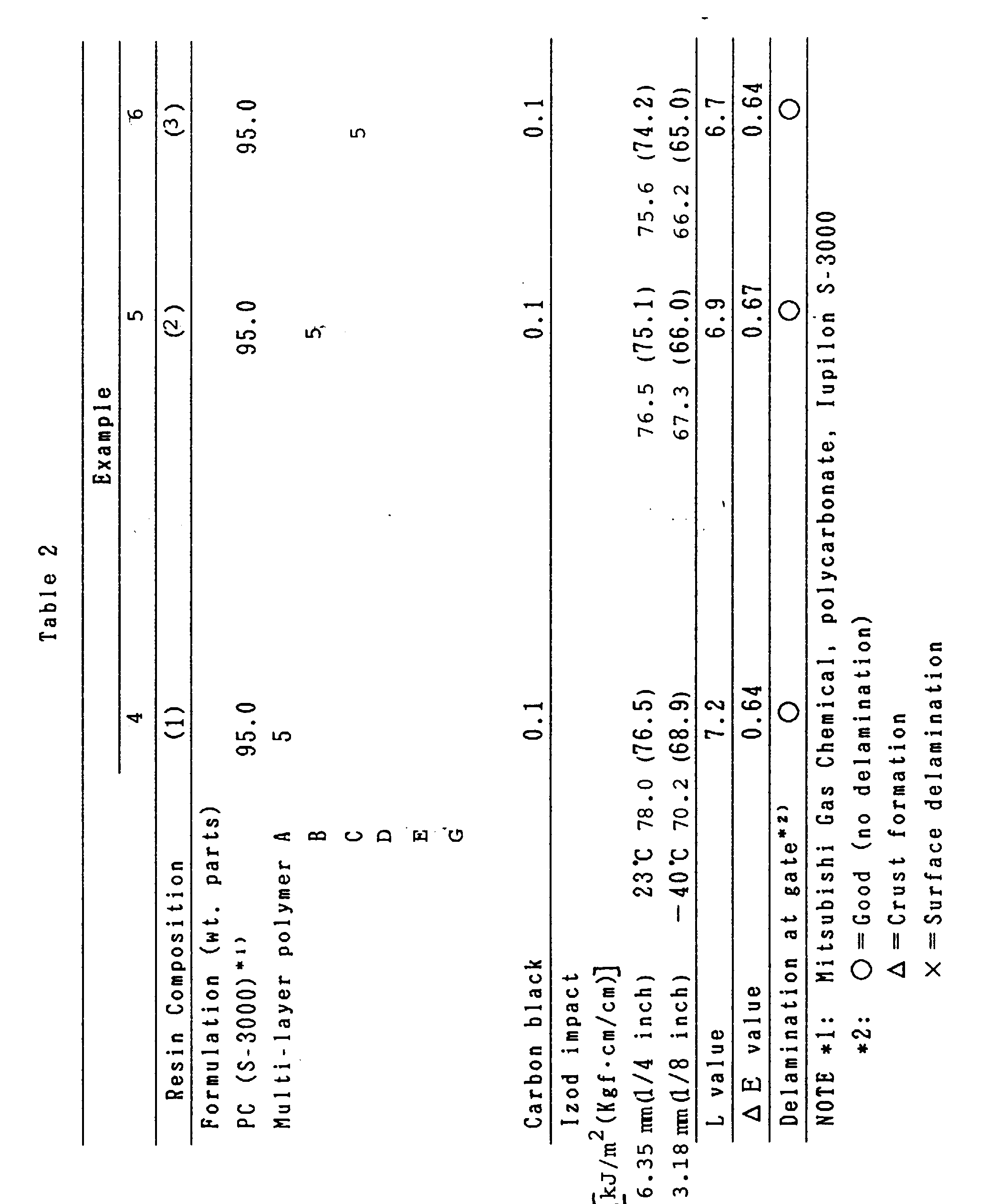

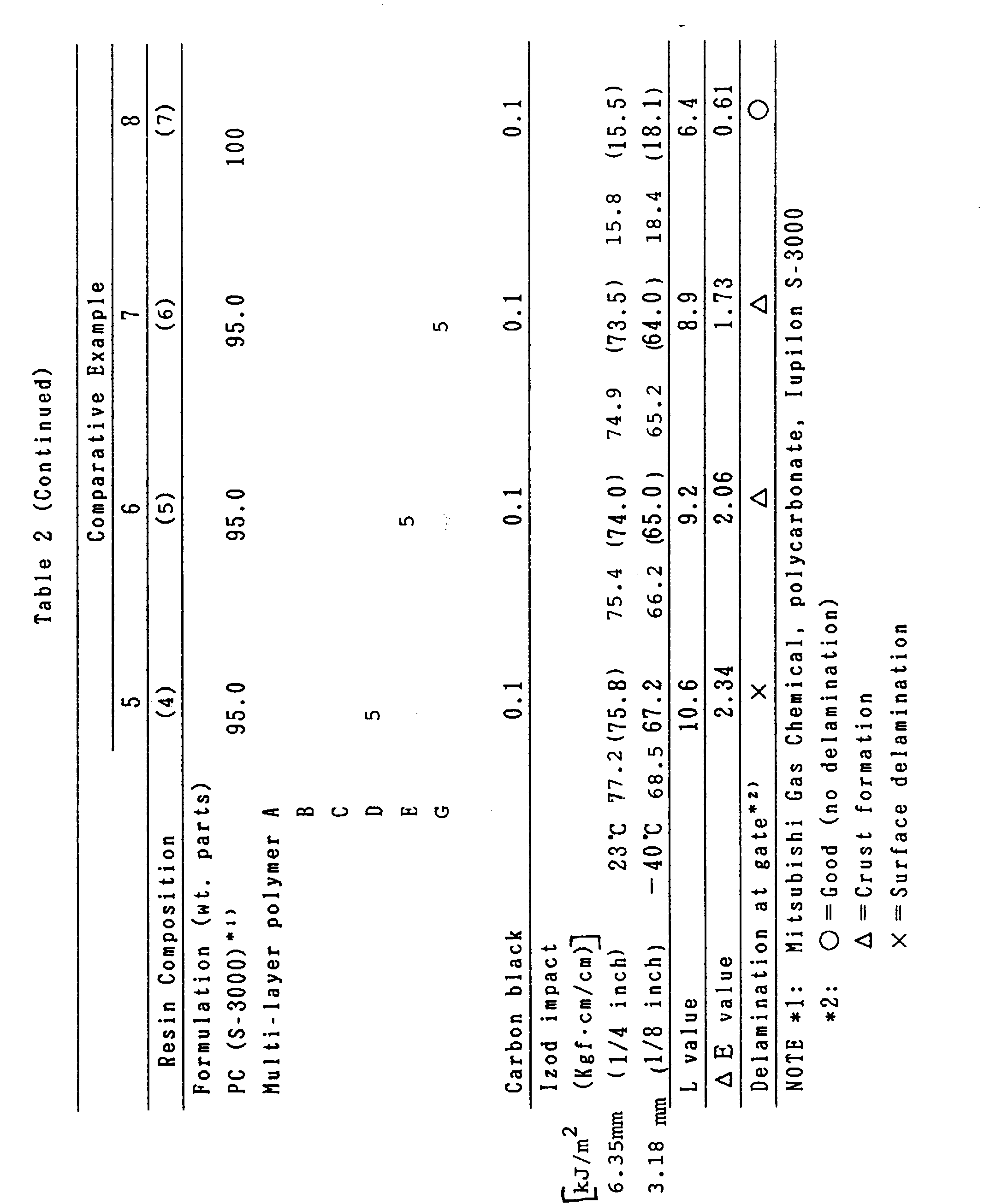

### SECTION B

### Polycarbonate-Polyester Base Resin Composition

### Example 7

### Production of Thermoplastic Resin Composition (8)

To 100 parts by weight of a resin mixture consisting of 66.5 parts by weight of bisphenol A-based polycarbonate resin (Mitsubishi Gas Chemical, Iupilon E-2000; hereinafter referred to as E-2000), 28.5 parts by weight of poly(1,4-butylene terephthalate) (Mitsubishi Rayon, N-1100; hereinafter referred to as N-1100) and 5 parts by weight of multi-layer polymer A was added 0.25 parts by weight of carbon black, and the mixture was melt-blended and extruded with a 40 mm single-screw extruder at a cylinder temperature of 240-260°C to give pellets of thermoplastic resin composition (8).

### Examples 8 and 9

### Production of Thermoplastic Resin Compositions (9) and (10)

The procedure of Example 7 was repeated except that multi-layer polymers B and C were respectively used in lieu of multi-layer polymer A to provide pellets of termoplastic resin compositions (9) and (10).

### Comparative Examples 9 to 11

### Production of Thermoplastic Resin Compositions (11) to (13)

The procedure of Example 7 was repeated except that multi-layer polymers D, F and G were respectively used in lieu of multi-layer polymer A to provide pellets of thermoplastic resin compositions (11) to (13).

### Comparative Example 12

### Production of Thermoplastic Resin Composition (14)

To 100 parts by weight of a resin mixture consisting of 70 parts by weight of polycarbonate resin (E-2000) and 30 parts by weight of poly(1,4-butylene terephthalate) (N-1100) were added 0.25 part by weight of carbon black and the resulting mixture was melt-blended and extruded with a 40 mm single-screw extruder at a cylinder temperature of 240-260°C to give pellets of thermoplastic resin composition (14).

### Example 10

### Production of Thermoplastic Resin Composition (15)

To 100 parts by weight of a resin mixture consisting of 75.04 parts by weight of polycarbonate resin (E-2000), 19.96 parts by weight of polyethylene terephthalate (Japan Unipet, RT-580: hereinafter referred to as RT-580) and 5 parts by weight of multi-layer polymer A were added 0.25 part by weight of carbon black and the resulting mixture was melt-blended and extruded with a 40 mm single-screw extruder at a cylinder temperature of 240-260°C to give pellets of thermoplastic resin composition (15).

### Example 11

### Production of Thermoplastic Resin Compositions (16)

The procedure of Example 10 was repeated except that multi-layer polymer B was used in lieu of multi-layer polymer A to provide pellets of thermoplastic resin composition (16).

### Comparative Example 13

### Production of Termoplastic Resin Composition (17)

The procedure of Example 11 was repeated except that multi-layer polymer D was used in lieu of multi-layer polymer B to give pellets of thermoplastic resin composition (17).

### Comparative Example 14

### Production of Thermoplastic Resin Composition (18).

To 100 parts by weight of a resin mixture consisiting of 79 parts by weight of polycarbonate resin (E-2000) and 21 parts by weight of polyethylene terephthalate (RT-580) were added 0.25 parts by weight of carbon black and the resulting mixture was melt-blended and extruded with a 40 mm single-screw extruder at a cylinder temperature of 240-260°C to give pellets of thermoplastic resin composition (18).

### Test Example 3

### Test For Impact Resistance

Pellets of thermoplastic resin compositions (8) to (18) were respectively dried at 110°C for not less than 6 hours and then injection-molded at 240-260°C to prepare test specimens. Each specimen was notched by machining to give a 3.2 mm-thick test piece for Izod impact test as directed in JIS K7113.

Using these test pieces, the impact resistances at 23°C, 0°C and -30°C were measured in accordance with JIS K7113. The results are shown in Table 3.

The delamination of the article at the gate was visually evaluated.

### Test Example 4

Pellets of thermoplastic resin compositions (8) to (18) were respectively dried at 110 °C for not less than 6 hours and then injection-molded at 240-260°C into test specimens of three graded thicknesses (2 mm, 3 mm, 4 mm).

The L value of the 4 mm thick portion and the color difference (ΔE value ) between the 2 mm and 4 mm thick portions of the single test specimen were determined in the same manner as in the Test Example 2. The results are shown in Table 3.

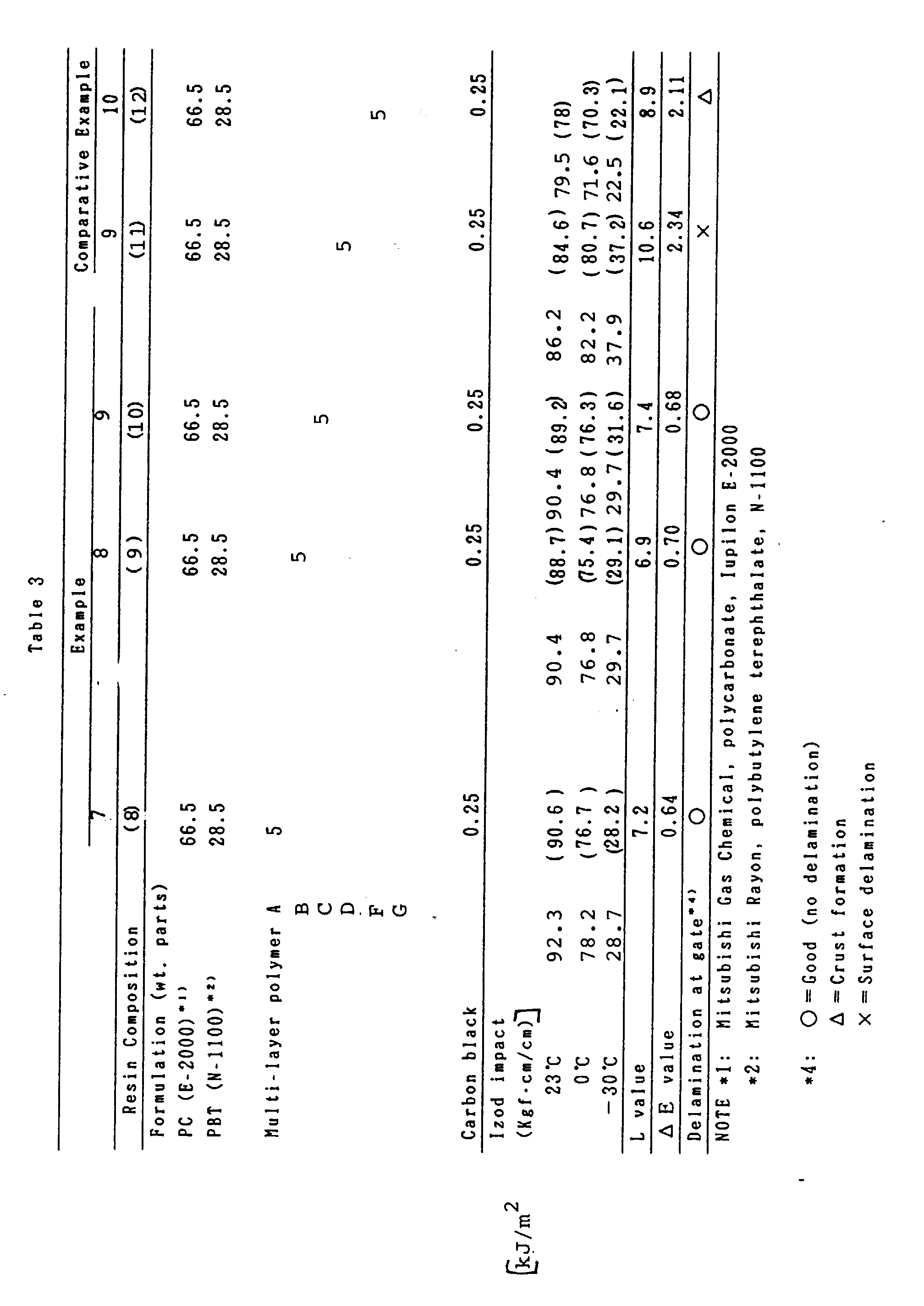

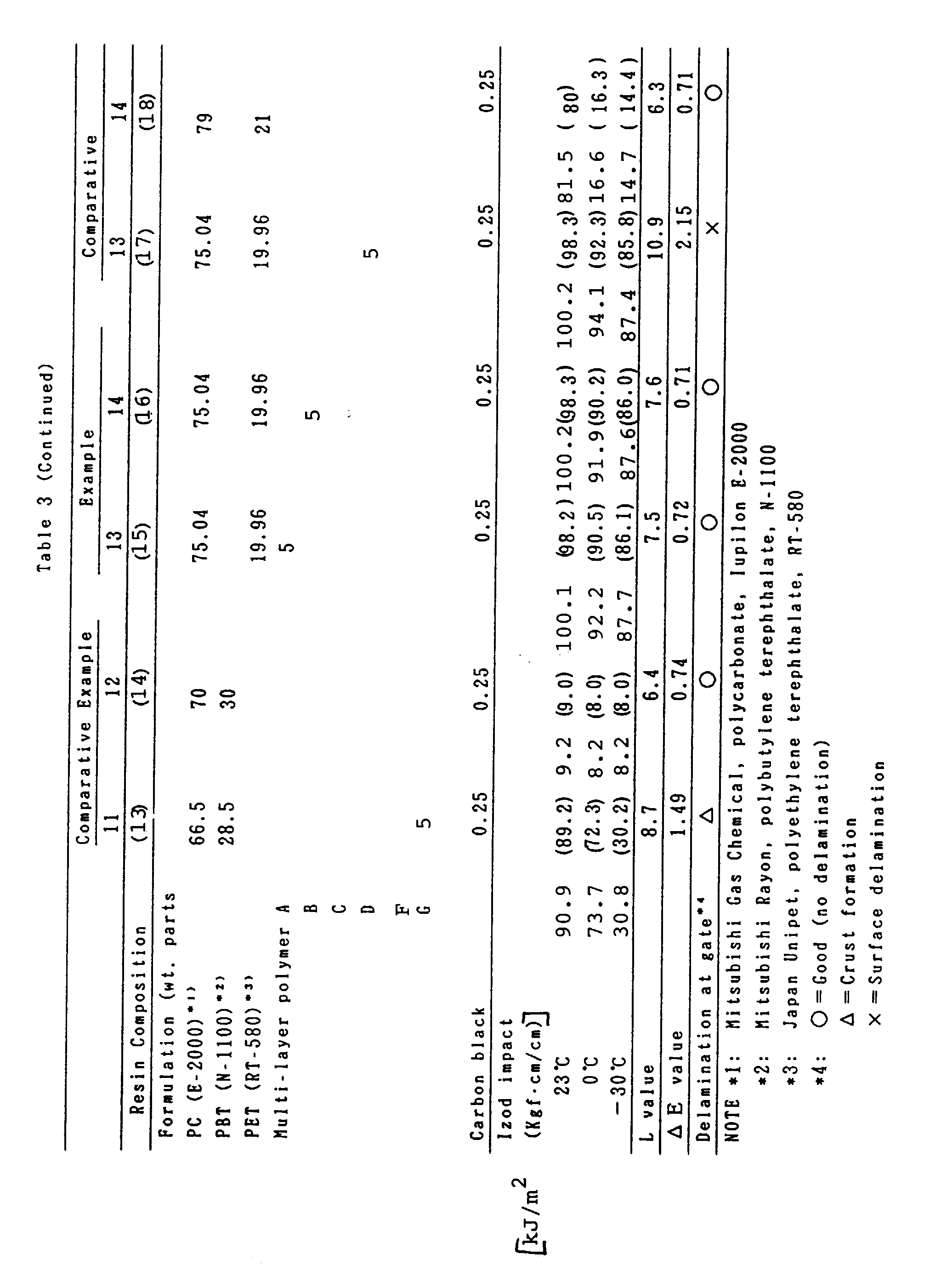

### Test Example 5

Slices were prepared from the resin composition of the Example 7 and molded article of the Comparative Example 11 respectively with a microtome, dyed and subjected to TEM observation to examine the dispersion of the multi-layer polymer in the resin compositions.

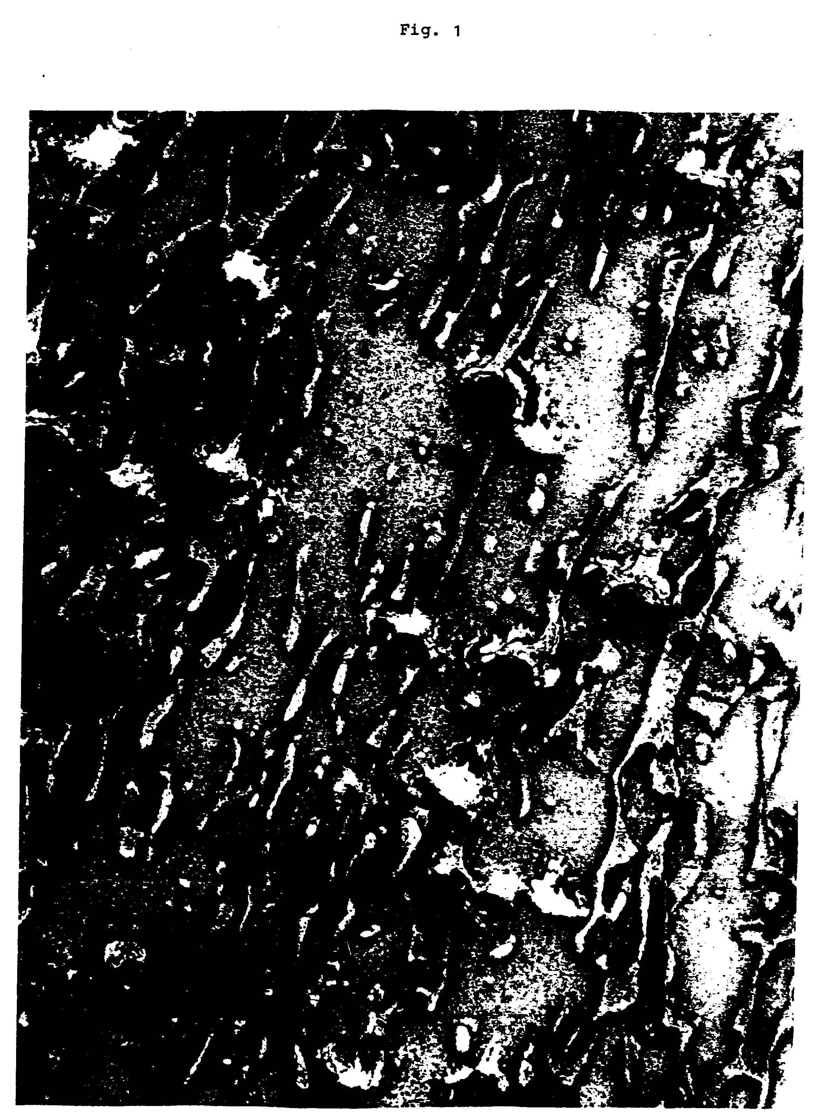

Fig. 1 is an electron microphotograph (x50000) of the composition of the Example 7. The composition is found to have a gray, continuous matrix of the polycarbonate resin phase in which the polybutylene terephthalate resin is dispersed as shapeless particles. The multi-layer polymer is seen as dark, spherical particles having white periphery. It is dispersed substantially in the phase of polybutylene terephthalate resin.

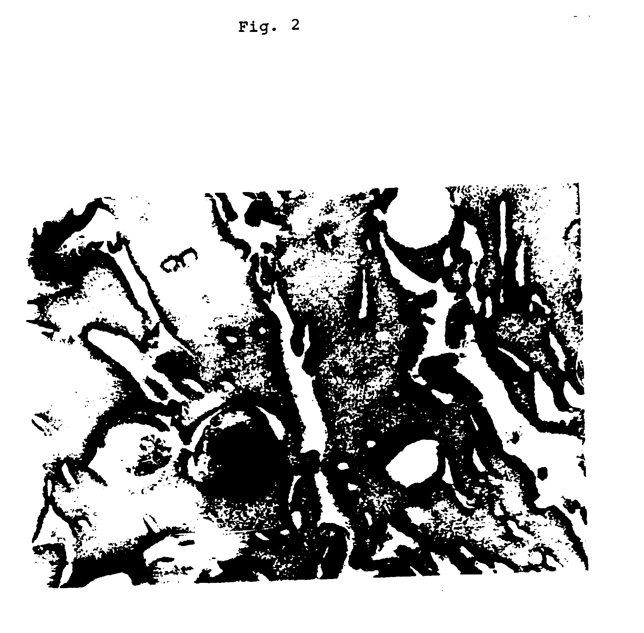

Fig. 2 is an electron microphotograph (x50000) of the resin composition of the Comparative Example 11. The composition is likewise has a gray, continuous matrix of the polycarbonate resin phase in which the polybutylene terephthalate resin is dispersed as shapeless particles or elongated phases. The multi-layer polymer is seen as substantially spherical particles and is dispersed mainly in the phase of polycarbonate resin.

## Claims

1. A multi-layer polymer which comprises a core layer formed from an aromatic vinyl monomer, an intermediate rubbery polymer layer formed from an alkyl acrylate monomer wherein the alkyl has 2-8 carbons and a glassy shell layer composed of a styrene-acrylonitrile copolymer with the acrylonitrile in an amount of not more than 30 % by weight based on the total of the monomers used for the shell layer wherein the styrene-acrylonitrile copolymer is cross-linked with a cross-linking monomer in an amount of 5-15 % by weight based on the total of the monomers used for the shell layer.

2. The multi-layer polymer as claimed in claim 1 wherein the core layer is formed from styrene.

3. The multi-layer polymer as claimed in claim 1 wherein the intermediate rubbery polymer layer is formed from at least one of 2-ethylhexyl acrylate and butyl acrylate.

4. The multi-layer polymer as claimed in claim 1 which further has a hard intermediate layer formed from a polymer of an alkyl methacrylate wherein the alkyl has 1-5 carbons between the intermediate rubbery polymer layer and the shell layer.

5. The multi-layer polymer as claimed in claim 4 wherein the alkyl methacrylate is methyl methacrylate or butyl methacrylate.

6. The multi-layer polymer as claimed in claim 1 wherein the core layer is cross-linked with a cross-linking monomer in an amount of not more than 30% by weight based on the monomer used for the core layer.

7. The multi-layer polymer as claimed in claim 1 wherein the core layer is cross-linked with a cross-linking monomer in an amount of 0.5-20% by weight based on the monomer used for the core layer.

8. The multi-layer polymer as claimed in claim 1 wherein the core layer is cross-linked with a cross-linking monomer in an amount of 5-15% by weight based on the monomer used for the core layer.

9. The multi-layer polymer as claimed in claim 1 wherein the hard intermediate layer is cross-linked with a cross-linking monomer in an amount of not more than 30% by weight based on the monomer used for the hard intermediate layer.

10. The multi-layer polymer as claimed in claim 1 wherein the hard intermediate layer is cross-linked with a cross-linking monomer in an amount of 0.5-20% by weight based on the monomer used for the hard intermediate layer.

11. The multi-layer polymer as claimed in claim 1 wherein the hard intermediate layer is cross-linked with a cross-linking monomer in an amount of 5-15% by weight based on the monomer used for the hard intermediate layer.

12. The multi-layer polymer as claimed in claim 1 wherein one, two, or three of the core layer, hard intermediate layer and the shell layer are cross-linked with a cross-linking monomer in a total amount of 1-30% by weight based on the total monomers used for the core layer, hard intermediate layer and the shell layer.

13. The multi-layer polymer as claimed in claim 1 wherein one, two, or three of the core layer, hard intermediate layer and the shell layer are cross-linked with a cross-linking monomer in a total amount of 3-20% by weight based on the total monomers used for the core layer, hard intermediate layer and the shell layer.

14. The multi-layer polymer as claimed in claim 1 which is composed of 12-42% by weight of the core layer, 48-78% by weight of the intermediate rubbery polymer layer and 10-40% by weight of the shell layer, based on the multi-layer polymer, respectively.

15. The multi-layer polymer as claimed in claim 1 which is composed of 15-30% by weight of the core layer, 50-65% by weight of the intermediate rubbery polymer layer and 15-25% by weight of the shell layer, based on the multi-layer polymer, respectively.

16. The multi-layer polymer as claimed in claim 1 which is composed of 12-42% by weight of the core layer, 48-78% by weight of the intermediate rubbery polymer layer and 10-40% by weight of the hard intermediate layer and the shell layer in conjunction, based on the multi-layer polymer, respectively.

17. The multi-layer polymer as claimed in claim 1 which is composed of 15-30% by weight of the core layer, 50-65% by weight of the intermediate rubbery polymer layer and 15-25% by weight of the hard intermediate layer and the shell layer in conjunction, based on the multi-layer polymer, respectively.

18. The multi-layer polymer as claimed in claim 1 which is composed of 10-40% by weight of the core layer, 30-80% by weight of the intermediate rubbery polymer layer and 10-40% by weight of the shell layer, based on the multi-layer polymer, respectively.

19. The multi-layer polymer as claimed in claim 1 which is composed of 15-30% by weight of the core layer, 40-70% by weight of the intermediate rubbery polymer layer and 15-25% by weight of the shell layer, based on the multi-layer polymer, respectively.

20. The multi-layer polymer as claimed in claim 1 which is composed of 10-40% by weight of the core layer, 30-80% by weight of the intermediate rubbery polymer layer and 10-40% by weight of the hard intermediate layer and the shell layer in conjunction, based on the multi-layer polymer, respectively.

21. The multi-layer polymer as claimed in claim 1 which is composed of 15-30% by weight of the core layer, 40-70% by weight of the intermediate rubbery polymer layer and 15-25% by weight of the hard intermediate layer and the shell layer in conjunction, based on the multi-layer polymer, respectively.

22. The multi-layer polymer as claimed in claim 1 which has a particle size in the range of 100-700 nm.

23. The multi-layer polymer as claimed in claim 1 which has a particle size in the range of 200-500 nm.

24. The multi-layer polymer as claimed in claim 1 which has a toluene soluble portion of not more than 10% by weight.

25. The multi-layer polymer as claimed in claim 1 which has a toluene soluble portion of not more than 6% by weight.

26. A thermoplastic resin composition which comprises:
(a) a polycarbonate resin; and
(b) a multi-layer polymer which is composed of 12-42% by weight of a core layer formed from an aromatic vinyl monomer, 48-78% by weight of an intermediate rubbery polymer layer formed from an alkyl acrylate monomer wherein the alkyl has 2-8 carbons and 10-40% by weight of a glassy shell composed of a styrene-acrylonitrile copolymer with the acrylonitrile in an amount of not more than 30% by weight based on the total of the monomers used for the shell layer wherein the styrene-acrylonitrile copolymer is cross-linked with a cross-linking monomer in an amount of 5-15% by weight based on the total of the monomers used for the shell layer.

27. The thermoplastic resin composition as claimed in claim 26 wherein the multi-layer polymer is composed of 15-30% by weight of the core layer, 50-65% by weight of the intermediate rubbery polymer layer and 15-25% by weight of the shell layer, based on the multi-layer polymer, respectively.

28. The thermoplastic resin composition as claimed in claim 26 wherein the multi-layer polymer is composed of 12-42% by weight of the core layer, 48-78% by weight of the intermediate rubbery polymer layer and 10-40% by weight of the hard intermediate layer and the shell layer in conjunction, based on the multi-layer polymer, respectively.

29. The thermoplastic resin composition as claimed in claim 26 wherein the multi-layer polymer is composed of 15-30% by weight of the core layer, 50-65% by weight of the intermediate rubbery polymer layer and 15-25% by weight of the hard intermediate layer and the shell layer in conjunction, based on the multi-layer polymer, respectively.

30. The thermoplastic resin composition as claimed in claim 26 which contains 0.5 to 60 parts by weight of the multi-layer polymer in relation to 100 parts by weight of the polycarbonate resin.

31. A molded article made of a thermoplastic resin composition which comprises:
(a) a polycarbonate resin; and
(b) a multi-layer polymer which is composed of 12-42% by weight of a core layer formed from an aromatic vinyl monomer, 48-78% by weight of an intermediate rubbery polymer layer formed from an alkyl acrylate monomer wherein the alkyl has 2-8 carbons and 10-40% by weight of a glassy shell layer composed of a styrene-acrylonitrile copolymer with the acrylonitrile in an amount of not more than 30% by weight based on the total of the monomers used for the shell layer wherein the styrene-acrylonitrile copolymer is cross-linked with a cross-linking monomer in an amount of 5-15% by weight based on the total of the monomer used for the shell layer.

32. A thermoplastic resin composition which comprises:
(a) a thermoplastic resin containing a polycarbonate resin and a polyester resin; and
(b) a multi-layer polymer which comprises a core layer formed from an aromatic vinyl monomer, an intermediate rubbery polymer layer formed from an alkyl acrylate monomer wherein the alkyl has 2-8 carbons and a glassy shell layer composed of a styrene-acrylonitrile copolymer with the acrylonitrile in an amount of not more than 30% by weight based on the total of the monomers used for the shell layer wherein the styrene-acrylonitrile copolymer is cross-linked with a cross-linking monomer in an amount of 5-15% by weight based on the total of the monomers used for the shell layer.

33. The thermoplastic resin composition as claimed in claim 32 wherein the multi-layer polymer is composed of 10-40% by weight of the core layer, 30-80% by weight of the intermediate rubbery polymer layer and 10-40% by weight of the shell layer, based on the multi-layer polymer, respectively.

34. The thermoplastic resin composition as claimed in claim 32 wherein the multi-layer polymer is composed of 15-30% by weight of the core layer, 40-70% by weight of the intermediate rubbery polymer layer and 15-25% by weight of the shell layer, based on the multi-layer polymer, respectively.

35. The thermoplastic resin composition as claimed in claim 32 wherein the multi-layer polymer is composed of 10-40% by weight of the core layer, 30-80% by weight of the intermediate rubbery polymer layer and 10-40% by weight of the hard intermediate layer and the shell layer in conjunction, based on the multi-layer polymer, respectively.

36. The thermoplastic resin composition as claimed in claim 32 wherein the multi-layer polymer is composed of 15-30% by weight of the core layer, 50-65% by weight of the intermediate rubbery polymer layer and 15-25% by weight of the hard intermediate layer and the shell layer in conjunction, based on the multi-layer polymer, respectively.

37. The thermoplastic resin composition as claimed in claim 32 which contains 0.5 to 50 parts by weight of the multi-layer polymer in relation to 100 parts by weight of the thermoplastic resin.

38. The thermoplastic resin composition as claimed in claim 32 wherein the thermoplastic resin is composed of 5-95% by weight of polycarbonate resin and 95-5% by weight of polyester resin.

39. The thermoplastic resin composition as claimed in claim 32 wherein the thermoplastic resin is composed of 50-95% by weight of polycarbonate resin and 50-5% by weight of polyester resin.

40. The thermoplastic resin composition as claimed in claim 32 wherein the multi-layer resin is dispersed substantially in the phase of polyester resin.

41. The thermoplastic resin composition as claimed in claim 32 wherein the polyester resin is a polyethylene terephthalate or a polybutylene terephthalate.

42. The thermoplastic resin composition as claimed in claim 40 wherein the polyester resin is a polybutylene terephthalate resin.

43. A molded article made of a thermoplastic resin composition which comprises:
(a) a thermoplastic resin containing a polycarbonate resin and a polyester resin; and
(b) a multi-layer polymer which comprises a core layer formed from an aromatic vinyl monomer, an intermediate rubbery polymer layer formed from an alkyl acrylate monomer wherein the alkyl has 2-8 carbons and a glassy shell layer composed of a styrene-acrylonitrile copolymer with the acrylonitrile in an amount of not more than 30% by weight based on the total of the monomers used for the shell layer wherein the styrene-acrylonitrile copolymer is cross-linked with a cross-linking monomer in an amount of 5-15% by weight based on the total of the monomers used for the shell layer.

## Patentansprüche

1. Mehrschichtiges Polymer, umfassend eine aus einem aromatischen Vinylmonomer gebildete Kernschicht, eine aus einem Alkylacrylatmonomer gebildete kautschukartige Polymer-Zwischenschicht, wobei das Alkyl 2-8 Kohlenstoffatome enthält, und eine glasartige Hüllschicht, die aus einem Styrol/Acrylnitril-Copolymer besteht, wobei das Acrylnitril in einer Menge von nicht mehr als 30 Gew.-%, bezogen auf die Gesamtmenge der für die Hüllschicht verwendeten Monomere, vorliegt, wobei das Styrol/Acrylnitril-Copolymer mit einem vernetzenden Monomer in einer Menge von 5-15 Gew.-%, bezogen auf die Gesamtmenge der für die Hüllschicht verwendeten Monomere, vernetzt ist.

2. Mehrschichtiges Polymer gemäß Anspruch 1, wobei die Kernschicht aus Styrol gebildet ist.

3. Mehrschichtiges Polymer gemäß Anspruch 1, wobei die kautschukartige Polymer-Zwischenschicht aus wenigstens einem der Monomere 2-Ethylhexylacrylat und Butylacrylat gebildet ist.

4. Mehrschichtiges Polymer gemäß Anspruch 1, das weiterhin eine aus einem Polymer eines Alkylmethacrylats gebildete harte Zwischenschicht, wobei das Alkyl 1-5 Kohlenstoffatome enthält, zwischen der kautschukartigen Polymer-Zwischen-schicht und der Hüllschicht aufweist.

5. Mehrschichtiges Polymer gemäß Anspruch 4, wobei das Alkylmethacrylat Methylmethacrylat oder Butylmethacrylat ist.

6. Mehrschichtiges Polymer gemäß Anspruch 1, wobei die Kernschicht mit einem vernetzenden Monomer in einer Menge von nicht mehr als 30 Gew.-%, bezogen auf das für die Kernschicht verwendete Monomer, vernetzt ist.

7. Mehrschichtiges Polymer gemäß Anspruch 1, wobei die Kernschicht mit einem vernetzenden Monomer in einer Menge von 0,5-20 Gew.-%, bezogen auf das für die Kernschicht verwendete Monomer, vernetzt ist.

8. Mehrschichtiges Polymer gemäß Anspruch 1, wobei die Kernschicht mit einem vernetzenden Monomer in einer Menge von 5-15 Gew.-%, bezogen auf das für die Kernschicht verwendete Monomer, vernetzt ist.

9. Mehrschichtiges Polymer gemäß Anspruch 1, wobei die harte Zwischenschicht mit einem vernetzenden Monomer in einer Menge von nicht mehr als 30 Gew.-%, bezogen auf das für die harte Zwischenschicht verwendete Monomer, vernetzt ist.

10. Mehrschichtiges Polymer gemäß Anspruch 1, wobei die harte Zwischenschicht mit einem vernetzenden Monomer in einer Menge von 0,5-20 Gew.-%, bezogen auf das für die harte Zwischenschicht verwendete Monomer, vernetzt ist.

11. Mehrschichtiges Polymer gemäß Anspruch 1, wobei die harte Zwischenschicht mit einem vernetzenden Monomer in einer Menge von 5-15 Gew.-%, bezogen auf das für die harte Zwischenschicht verwendete Monomer, vernetzt ist.

12. Mehrschichtiges Polymer gemäß Anspruch 1, wobei eine, zwei oder drei der Schichten Kernschicht, harte Zwischenschicht und Hüllschicht mit einem vernetzenden Monomer in einer Gesamtmenge von 1-30 Gew.-%, bezogen auf die Gesamtmenge der für die Kernschicht, die harte Zwischenschicht und die Hüllschicht verwendeten Monomere, vernetzt ist.

13. Mehrschichtiges Polymer gemäß Anspruch 1, wobei eine, zwei oder drei der Schichten Kernschicht, harte Zwischenschicht und Hüllschicht mit einem vernetzenden Monomer in einer Gesamtmenge von 3-20 Gew.-%, bezogen auf die Gesamtmenge der für die Kernschicht, die harte Zwischenschicht und die Hüllschicht verwendeten Monomere, vernetzt ist.

14. Mehrschichtiges Polymer gemäß Anspruch 1, das aus 12-42 Gew.-% der Kernschicht, 48-78 Gew.-% der kautschukartigen Polymer-Zwischenschicht und 10-40 Gew.-% der Hüllschicht besteht, jeweils bezogen auf das mehrschichtige Polymer.

15. Mehrschichtiges Polymer gemäß Anspruch 1, das aus 15-30 Gew.-% der Kernschicht, 50-65 Gew.-% der kautschukartigen Polymer-Zwischenschicht und 15-25 Gew.-% der Hüllschicht besteht, jeweils bezogen auf das mehrschichtige Polymer.

16. Mehrschichtiges Polymer gemäß Anspruch 1, das aus 12-42 Gew.-% der Kernschicht, 48-78 Gew.-% der kautschukartigen Polymer-zwischenschicht und 10-40 Gew.-% der harten Zwischenschicht und der Hüllschicht zusammen besteht, jeweils bezogen auf das mehrschichtige Polymer.

17. Mehrschichtiges Polymer gemäß Anspruch 1, das aus 15-30 Gew.-% der Kernschicht, 50-65 Gew.-% der kautschukartigen Polymer-Zwischenschicht und 15-25 Gew.-% der harten Zwischenschicht und der Hüllschicht zusammen besteht, jeweils bezogen auf das mehrschichtige Polymer.

18. Mehrschichtiges Polymer gemäß Anspruch 1, das aus 10-40 Gew.-% der Kernschicht, 30-80 Gew.-% der kautschukartigen Polymer-zwischenschicht und 10-40 Gew.-% der Hüllschicht besteht, jeweils bezogen auf das mehrschichtige Polymer.

19. Mehrschichtiges Polymer gemäß Anspruch 1, das aus 15-30 Gew.-% der Kernschicht, 40-70 Gew.-% der kautschukartigen Polymer-zwischenschicht und 15-25 Gew.-% der Hüllschicht besteht, jeweils bezogen auf das mehrschichtige Polymer.

20. Mehrschichtiges Polymer gemäß Anspruch 1, das aus 10-40 Gew.-% der Kernschicht, 30-80 Gew.-% der kautschukartigen polymer-zwischenschicht und 10-40 Gew.-% der harten Zwischenschicht und der Hüllschicht zusammen besteht, jeweils bezogen auf das mehrschichtige Polymer.

21. Mehrschichtiges Polymer gemäß Anspruch 1, das aus 15-30 Gew.-% der Kernschicht, 40-70 Gew.-% der kautschukartigen Polymer-zwischenschicht und 15-25 Gew.-% der harten Zwischenschicht und der Hüllschicht zusammen besteht, jeweils bezogen auf das mehrschichtige Polymer.

22. Mehrschichtiges Polymer gemäß Anspruch 1, das eine Teilchengröße im Bereich von 100-700 nm hat.

23. Mehrschichtiges Polymer gemäß Anspruch 1, das eine Teilchengröße im Bereich von 200-500 nm hat.

24. Mehrschichtiges Polymer gemäß Anspruch 1, das einen in Toluol löslichen Anteil von nicht mehr als 10 Gew.-% hat.

25. Mehrschichtiges Polymer gemäß Anspruch 1, das einen in Toluol löslichen Anteil von nicht mehr als 6 Gew.-% hat.

26. Thermoplastische Harzzusammensetzung, umfassend:
(a) ein Polycarbonatharz; und
(b) ein mehrschichtiges Polymer, bestehend aus 12-42 Gew.-% einer aus einem aromatischen Vinylmonomer gebildeten Kernschicht, 48-78 Gew.-% einer aus einem Alkylacrylatmonomer gebildeten kautschukartigen Polymer-Zwischenschicht, wobei das Alkyl 2-8 Kohlenstoffatome enthält, und 10-40 Gew.-% einer glasartigen Hüllschicht, die aus einem Styrol/Acrylnitril-Copolymer besteht, wobei das Acrylnitril in einer Menge von nicht mehr als 30 Gew.-%, bezogen auf die Gesamtmenge der für die Hüllschicht verwendeten Monomere, vorliegt, wobei das Styrol/Acrylnitril-Copolymer mit einem vernetzenden Monomer in einer Menge von 5-15 Gew.-%, bezogen auf die Gesamtmenge der für die Hüllschicht verwendeten Monomere, vernetzt ist.

27. Thermoplastische Harzzusammensetzung gemäß Anspruch 26, wobei das mehrschichtige Polymer aus 15-30 Gew.-% der Kernschicht, 50-65 Gew.-% der kautschukartigen Polymer-Zwischenschicht und 15-25 Gew.-% der Hüllschicht besteht, jeweils bezogen auf das mehrschichtige Polymer.

28. Thermoplastische Harzzusammensetzung gemäß Anspruch 26, wobei das mehrschichtige Polymer aus 12-42 Gew.-% der Kernschicht, 48-78 Gew.-% der kautschukartigen Polymer-Zwischenschicht und 10-40 Gew.-% der harten Zwischenschicht und der Hüllschicht zusammen besteht, jeweils bezogen auf das mehrschichtige Polymer.

29. Thermoplastische Harzzusammensetzung gemäß Anspruch 26, wobei das mehrschichtige Polymer aus 15-30 Gew.-% der Kernschicht, 50-65 Gew.-% der kautschukartigen Polymer-Zwischenschicht und 15-25 Gew.-% der harten Zwischenschicht und der Hüllschicht zusammen besteht, jeweils bezogen auf das mehrschichtige Polymer.

30. Thermoplastische Harzzusammensetzung gemäß Anspruch 26, die 0,5 bis 60 Gewichtsteile des mehrschichtigen Polymers im Verhältnis zu 100 Gewichtsteilen des Polycarbonatharzes enthält.

31. Formgepreßter Gegenstand, der aus einer thermoplastischen Harzzusammensetzung besteht, umfassend:
(a) ein Polycarbonatharz; und
(b) ein mehrschichtiges Polymer, bestehend aus 12-42 Gew.-% einer aus einem aromatischen Vinylmonomer gebildeten Kernschicht, 48-78 Gew.-% einer aus einem Alkylacrylatmonomer gebildeten kautschukartigen Polymer-Zwischenschicht, wobei das Alkyl 2-8 Kohlenstoffatome enthält, und 10-40 Gew.-% einer glasartigen Hüllschicht, die aus einem Styrol/Acrylnitril-Copolymer besteht, wobei das Acrylnitril in einer Menge von nicht mehr als 30 Gew.-%, bezogen auf die Gesamtmenge der für die Hüllschicht verwendeten Monomere, vorliegt, wobei das Styrol/Acrylnitril-Copolymer, mit einem vernetzenden Monomer in einer Menge von 5-15 Gew.-%, bezogen auf die Gesamtmenge der für die Hüllschicht verwendeten Monomere, vernetzt ist.

32. Thermoplastische Harzzusammensetzung, umfassend:
(a) ein thermoplastisches Harz, das ein Polycarbonatharz und ein Polyesterharz enthält; und
(b) ein mehrschichtiges Polymer, umfassend eine aus einem aromatischen Vinylmonomer gebildete Kernschicht, eine aus einem Alkylacrylatmonomer gebildete kautschukartige Polymer-zwischenschicht, wobei das Alkyl 2-8 Kohlenstoffatome enthält, und eine glasartige Hüllschicht, die aus einem Styrol/Acrylnitril-Copolymer besteht, wobei das Acrylnitril in einer Menge von nicht mehr als 30 Gew.-%, bezogen auf die Gesamtmenge der für die Hüllschicht verwendeten Monomere, vorliegt, wobei das Styrol/Acrylnitril-Copolymer mit einem vernetzenden Monomer in einer Menge von 5-15 Gew.-%, bezogen auf die Gesamtmenge der für die Hüllschicht verwendeten Monomere, vernetzt ist.

33. Thermoplastische Harzzusammensetzung gemäß Anspruch 32, wobei das mehrschichtige Polymer aus 10-40 Gew.-% der Kernschicht, 30-80 Gew.-% der kautschukartigen Polymer-Zwischenschicht und 10-40 Gew.-% der Hüllschicht besteht, jeweils bezogen auf das mehrschichtige Polymer.

34. Thermoplastische Harzzusammensetzung gemäß Anspruch 32, wobei das mehrschichtige Polymer aus 15-30 Gew.-% der Kernschicht, 40-70 Gew.-% der kautschukartigen Polymer-Zwischenschicht und 15-25 Gew.-% der Hüllschicht besteht, jeweils bezogen auf das mehrschichtige Polymer.

35. Thermoplastische Harzzusammensetzung gemäß Anspruch 32, wobei das mehrschichtige Polymer aus 10-40 Gew.-% der Kernschicht, 30-80 Gew.-% der kautschukartigen Polymer-Zwischenschicht und 10-40 Gew.-% der harten Zwischenschicht und der Hüllschicht zusammen besteht, jeweils bezogen auf das mehrschichtige Polymer.

36. Thermoplastische Harzzusammensetzung gemäß Anspruch 32, wobei das mehrschichtige Polymer aus 15-30 Gew.-% der Kernschicht, 50-65 Gew.-% der kautschukartigen Polymer-Zwischenschicht und 15-25 Gew.-% der harten Zwischenschicht und der Hüllschicht zusammen besteht, jeweils bezogen auf das mehrschichtige Polymer.

37. Thermoplastische Harzzusammensetzung gemäß Anspruch 32, die 0,5 bis 50 Gewichtsteile des mehrschichtigen Polymers im Verhältnis zu 100 Gewichtsteilen des thermoplastischen Harzes enthält.

38. Thermoplastische Harzzusammensetzung gemäß Anspruch 32, wobei das thermoplastische Harz aus 5-95 Gew.-% Polycarbonatharz und 95-5 Gew.-% Polyesterharz besteht.

39. Thermoplastische Harzzusammensetzung gemäß Anspruch 32, wobei das thermoplastische Harz aus 50-95 Gew.-% Polycarbonatharz und 50-5 Gew.-% Polyesterharz besteht.

40. Thermoplastische Harzzusammensetzung gemäß Anspruch 32, wobei das mehrschichtige Harz im wesentlichen in der Phase des Polyesterharzes dispergiert ist.

41. Thermoplastische Harzzusammensetzung gemäß Anspruch 32, wobei das Polyesterharz ein Polyethylenterephthalat oder ein Polybutylenterephthalat ist.

42. Thermoplastische Harzzusammensetzung gemäß Anspruch 40, wobei das Polyesterharz ein Polybutylenterephthalatharz ist.

43. Formgepreßter Gegenstand, der aus einer thermoplastischen Harzzusammensetzung besteht, umfassend:
(a) ein thermoplastisches Harz, das ein Polycarbonatharz und ein Polyesterharz enthält; und
(b) ein mehrschichtiges Polymer, umfassend eine aus einem aromatischen Vinylmonomer gebildete Kernschicht, eine aus einem Alkylacrylatmonomer gebildete kautschukartige Polymer-Zwischenschicht, wobei das Alkyl 2-8 Kohlenstoffatome enthält, und eine glasartige Hüllschicht, die aus einem Styrol/Acrylnitril-Copolymer besteht, wobei das Acrylnitril in einer Menge von nicht mehr als 30 Gew.-%, bezogen auf die Gesamtmenge der für die Hüllschicht verwendeten Monomere, vorliegt, wobei das Styrol/Acrylnitril-Copolymer mit einem vernetzenden Monomer in einer Menge von 5-15 Gew.-%, bezogen auf die Gesamtmenge der für die Hüllschicht verwendeten Monomere, vernetzt ist.

## Revendications

1. Polymère multi-couche qui comprend une couche-âme formée à partir d'un monomère vinyl-aromatique, une couche intermédiaire de polymère de type caoutchouc formée à partir d'un monomère acrylate d'alkyle dans lequel le groupe alkyle comporte de 2 à 8 atomes de carbone, et une couche-enveloppe vitreuse constituée par un copolymère styrène/acrylonitrile avec une teneur en acrylonitrile ne dépassant pas 30% en poids par rapport à la quantité totale de monomères utilisée pour la couche-enveloppe, dans lequel on fait réticuler le copolymère styrène/acrylonitrile avec un monomère de réticulation en une quantité de 5 à 15% en poids par rapport à la quantité totale des monomères utilisée pour la couche-enveloppe.

2. Polymère multi-couche conforme à la revendication 1, dans lequel la couche-âme est formée à partir du styrène.

3. Polymère multi-couche conforme à la revendication 1, dans lequel la couche intermédiaire de polymère de type caoutchouc est formée à partir d'au moins un des acrylate de 2-éthylhexyle et acrylate de butyle.

4. Polymère multi-couche conforme à la revendication 1 qui a de plus une couche intermédiaire dure formée à partir d'un polymère de méthacrylate d'alkyle dans lequel le groupe alkyle comporte de 1 à 5 atomes de carbone, entre la couche intermédiaire de polymère de type caoutchouc et la couche-enveloppe.

5. Polymère multi-couche conforme à la revendication 4, dans lequel le méthacrylate d'alkyle est le méthacrylate de méthyle ou le méthacrylate de butyle.

6. Polymère multi-couche conforme à la revendication 1, dans lequel on fait réticuler la couche-âme avec un monomère de réticulation en une quantité ne dépassant pas 30% en poids par rapport au monomère utilisé pour la couche-âme.

7. Polymère multi-couche conforme à la revendication 1, dans lequel on fait réticuler la couche-âme avec un monomère de réticulation en une quantité de 0,5 à 20% en poids par rapport au monomère utilisé pour la couche-âme.

8. Polymère multi-couche conforme à la revendication 1, dans lequel on fait réticuler la couche-âme avec un monomère de réticulation en une quantité de 5 à 15% en poids par rapport au monomère utilisé pour la couche-âme.

9. Polymère multi-couche conforme à la revendication 1, dans lequel on fait réticuler la couche intermédiaire dure avec un monomère de réticulation en une quantité ne dépassant pas 30% en poids par rapport au monomère utilisé pour la couche intermédiaire dure.

10. Polymère multi-couche conforme à la revendication 1, dans lequel on fait réticuler la couche intermédiaire dure avec un monomère de réticulation en une quantité de 0,5 à 20% en poids par rapport au monomère utilisé pour la couche intermédiaire dure.

11. Polymère multi-couche conforme à la revendication 1, dans lequel on fait réticuler la couche intermédiaire dure avec un monomère de réticulation en une quantité de 5 à 15% en poids par rapport au monomère utilisé pour la couche intermédiaire dure.

12. Polymère multi-couche conforme à la revendication 1,dans lequel on fait réticuler une, deux ou trois des couche-âme, couche intermédiaire dure et couche-enveloppe avec un monomère de réticulation en une quantité totale de 1 à 30% en poids par rapport à la quantité totale des monomères utilisée pour les couche-âme, couche intermédiaire dure et couche-enveloppe.

13. Polymère multi-couche conforme à la revendication 1,dans lequel on fait réticuler une, deux ou trois des couche-âme, couche intermédiaire dure et couche-enveloppe avec un monomère de réticulation en une quantité totale de 3 à 20% en poids par rapport à la quantité totale des monomères utilisée pour les couche-âme, couche intermédiaire dure et couche-enveloppe.

14. Polymère multi-couche conforme à la revendication 1 qui est composé respectivement par rapport au polymère multi-couche, de 12 à 42% en poids de couche-âme, de 48 à 78% en poids de couche intermédiaire de polymère de type caoutchouc et de 10 à 40% en poids de couche-enveloppe.

15. Polymère multi-couche conforme à la revendication 1 qui est composé respectivement par rapport au polymère multi-couche, de 15 à 30% en poids de couche-âme, de 50 à 65% en poids de couche intermédiaire de polymère de type caoutchouc et de 15 à 25% en poids de couche-enveloppe.

16. Polymère multi-couche conforme à la revendication 1 qui est composé respectivement par rapport au polymère multi-couche, de 12 à 42% en poids de couche-âme, de 48 à 78% en poids de couche intermédiaire de polymère de type caoutchouc et de 10 à 40% en poids de la combinaison de la couche intermédiaire dure et de la couche-enveloppe.

17. Polymère multi-couche conforme à la revendication 1 qui est composé respectivement par rapport au polymère multi-couche, de 15 à 30% en poids de couche-âme, de 50 à 65% en poids de couche intermédiaire de polymère de type caoutchouc et de 15 à 25 % en poids de la combinaison de la couche intermédiaire dure et de la couche-enveloppe.

18. Polymère multi-couche conforme à la revendication 1 qui est composé respectivement par rapport au polymère multi-couche, de 10 à 40% en poids de couche-âme, de 30 à 80% en poids de couche intermédiaire de polymère de type caoutchouc et de 10 à 40% en poids de couche-enveloppe.

19. Polymère multi-couche conforme à la revendication 1 qui est composé respectivement par rapport au polymère multi-couche, de 15 à 30% en poids de couche-âme, de 40 à 70% en poids de couche intermédiaire de polymère de type caoutchouc et de 15 à 25 % en poids de couche-enveloppe.

20. Polymère multi-couche conforme à la revendication 1 qui est composé respectivement par rapport au polymère multi-couche, de 10 à 40% en poids de couche-âme, de 30 à 80% en poids de couche intermédiaire de polymère de type caoutchouc et de 10 à 40% en poids de la combinaison de la couche intermédiaire dure et de la couche-enveloppe.

21. Polymère multi-couche conforme à la revendication 1 qui est composé respectivement par rapport au polymère multi-couche, de 15 à 30% en poids de couche-âme, de 40 à 70% en poids de couche intermédiaire de polymère de type caoutchouc et de 15 à 25 % en poids de la combinaison de la couche intermédiaire dure et de la couche-enveloppe.

22. Polymère multi-couche conforme à la revendication 1 qui a une taille de particules de 100 à 700 nm.

23. Polymère multi-couche conforme à la revendication 1 qui a une taille de particules de 200 à 500 nm.

24. Polymère multi-couche conforme à la revendication 1 qui a une partie soluble dans le toluène ne dépassant pas 10 % en poids.

25. Polymère multi-couche conforme à la revendication 1 qui a une partie soluble dans le toluène ne dépassant pas 6 % en poids.

26. Composition de résine thermoplastique qui comprend :
(a) une résine polycarbonate ; et
(b) un polymère multi-couche qui est composé de 12 à 42% en poids d'une couche-âme formée à partir d'un monomère vinyl-aromatique, de 48 à 78% en poids d'une couche de polymère intermédiaire de type caoutchouc formée à partir d'un monomère acrylate d'alkyle dans lequel le groupe alkyle comporte de 2 à 8 atomes de carbone, et de 10 à 40% en poids d'une couche-enveloppe vitreuse constituée par un copolymère styrène/acrylonitrile avec une teneur en acrylonitrile ne dépassant pas 30% en poids par rapport à la quantité totale des monomères utilisée pour la couche-enveloppe, dans lequel on fait réticuler le copolymère styrène/acrylonitrile avec un monomère de réticulation en une quantité de 5 à 15% en poids par rapport à la quantité totale utilisée pour la couche-enveloppe.

27. Composition de résine thermoplastique conforme à la revendication 26, dans laquelle le polymère multi-couche est composé respectivement par rapport au polymère multi-couche, de 15 à 30% en poids de couche-âme, de 50 à 65% en poids de couche intermédiaire de type caoutchouc, et de 15 à 25% en poids de couche-enveloppe.

28. Composition de résine thermoplastique conforme à la revendication 26, dans laquelle le polymère multi-couche est composé respectivement par rapport au polymère multi-couche,de 12 à 42% en poids de couche-âme, de 48 à 78% en poids de couche intermédiaire de type caoutchouc, et de 10 à 40% en poids de la combinaison de la couche intermédiaire dure et de la couche-enveloppe.

29. Composition de résine thermoplastique conforme à la revendication 26, dans laquelle le polymère multi-couche est composé respectivement par rapport au polymère multi-couche, de 15 à 30% en poids de couche-âme, de 50 à 65% en poids de couche intermédiaire de type caoutchouc, et de 15 à 25% en poids de la combinaison de la couche intermédiaire dure et de la couche-enveloppe.

30. Composition de résine thermoplastique conforme à la revendication 26 qui contient 0,5 à 60 parties en poids du polymère multi-couche par rapport à 100 parties en poids de résine polycarbonate.

31. Article moulé fabriqué avec une composition de résine thermoplastique qui comprend :
(a) une résine polycarbonate ; et
(b) un polymère multi-couche qui est composé de 12 à 42% en poids d'une couche-âme formée à partir d'un monomère vinyl-atomàtique, de 48 à 78% en poids d'une couche de polymère intermédiaire de type caoutchouc formée à partir d'un monomère acrylate d'alkyle dans lequel le groupe alkyle comporte de 2 à 8 atomes de carbone, et de 10 à 40% en poids d'une couche-enveloppe vitreuse constituée par un copolymère styrène/acrylonitrile avec une teneur en acrylonitrile ne dépassant pas 30% en poids par rapport à la quantité totale des monomères utilisée pour la couche-enveloppe, dans lequel on fait réticuler le copolymère styrène/acrylonitrile avec un monomère de réticulation en une quantité de 5 à 15% en poids par rapport à la quantité totale utilisée pour la couche-enveloppe.

32. Composition de résine thermoplastique qui comprend :
(a) une résine thermoplastique contenant une résine polycarbonate et une résine polyester ; et
(b) un polymère multi-couche qui comprend une couche-âme formée à partir d'un monomère vinyl-aromatique, une couche de polymère intermédiaire de type caoutchouc formée à partir d'un monomère acrylate d'alkyle dans lequel le groupe alkyle comporte de 2 à 8 atomes de carbone, et une couche-enveloppe vitreuse constituée par un copolymère styrène/acrylonitrile avec une teneur en acrylonitrile ne dépassant pas 30% en poids par rapport à la quantité totale des monomères utilisée pour la couche-enveloppe, dans lequel on fait réticuler le copolymère styrène/acrylonitrile avec un monomère de réticulation en une quantité de 5 à 15% en poids par rapport à la quantité totale utilisée pour la couche-enveloppe.

33. Composition de résine thermoplastique conforme à la revendication 32, dans laquelle le polymère multi-couche est composé respectivement par rapport au polymère multi-couche, de 10 à 40% en poids de couche-âme, de 30 à 80% en poids de couche intermédiaire de polymère de type caoutchouc et de 10 à 40% en poids de couche-enveloppe.

34. Composition de résine thermoplastique conforme à la revendication 32, dans laquelle le polymère multi-couche est composé respectivement par rapport au polymère multi-couche, de 15 à 30% en poids de couche-âme, de 40 à 70% en poids de couche intermédiaire de polymère de type caoutchouc et de 15 à 25% en poids de couche-enveloppe.

35. Composition de résine thermoplastique conforme à la revendication 32, dans laquelle le polymère multi-couche est composé respectivement par rapport au polymère multi-couche, de 10 à 40% en poids de couche-âme, de 30 à 80% en poids de couche intermédiaire de polymère de type caoutchouc et de 10 à 40% en poids de la combinaison de la couche intermédiaire dure et de la couche-enveloppe.

36. Composition de résine thermoplastique conforme à la revendication 32, dans laquelle le polymère multi-couche est composé respectivement par rapport au polymère multi-couche, de 15 à 30% en poids de couche-âme, de 50 à 65 % en poids de couche intermédiaire de polymère de type caoutchouc et de 15 à 25% en poids de la combinaison de la couche intermédiaire dure et de la couche-enveloppe.

37. Composition de résine thermoplastique conforme à la revendication 32 qui contient 0,5 à 50 parties en poids de polymère multi-couche par rapport à 100 parties en poids de résine thermoplastique.

38. Composition de résine thermoplastique conforme à la revendication 32, dans laquelle la résine thermoplastique est composée de 5 à 95% en poids de résine polycarbonate et de 95 à 5% en poids de résine polyester.

39. Composition de résine thermoplastique conforme à la revendication 32, dans laquelle la résine thermoplastique est composée de 50 à 95% en poids de résine polycarbonate et de 50 à 5% en poids de résine polyester.

40. Composition de résine thermoplastique conforme à la revendication 32, dans laquelle la résine multi-couche est pratiquement dispersée dans la phase de la résine polyester.

41. Composition de résine thermoplastique conforme à la revendication 32, dans laquelle la résine polyester est un poly(éthylène téréphtalate) ou un poly(butylène téréphtalate).

42. Composition de résine thermoplastique conforme à la revendication 40, dans laquelle la résine polyester est un poly(butylène téréphtalate).

43. Article moulé fabriqué avec une composition de résine thermoplastique qui comprend :
(a) une résine thermoplastique contenant une résine polycarbonate et une résine polyester ; et
(b) un polymère multi-couche qui comprend une couche-âme formée à partir d'un monomère vinyl-aromatique, une couche de polymère intermédiaire de type caoutchouc formée à partir d'un monomère acrylate d'alkyle dans lequel le groupe alkyle comporte de 2 à 8 atomes de carbone, et une couche-enveloppe vitreuse constituée par un copolymère styrène/acrylonitrile avec une teneur en acrylonitrile ne dépassant pas 30% en poids par rapport à la quantité totale des monomères utilisée pour la couche-enveloppe, dans lequel on fait réticuler le copolymère styrène/acrylonitrile avec un monomère de réticulation en une quantité de 5 à 15% en poids par rapport à la quantité totale utilisée pour la couche-enveloppe.
